# EUROPEAN PATENT SPECIFICATION

(11) **EP 0 810 797 B1**
(45) Date of publication and mention of the grant of the patent: **21.07.2004**
(21) Application number: 97303526.4
(22) Date of filing: 23.05.1997
(51) Int. Cl.: H04N 9/65

(54) **Digital colour signal modulating apparatus**
Gerät zur digitalen Modulation eines Farbsignals
Appareil de modulation numérique de signal couleur

(30) Priority: 29.05.1996 JP 15772696
(43) Date of publication of application: 03.12.1997
(73) Proprietor: Oki Electric Industry Co., Ltd., Tokyo (JP)
(72) Inventor: Takei, Akihiro, c/o Oki Micro Design, Miyazaki-shi, Miyazaki-pref. (JP)
(74) Representative: Read, Matthew Charles

(56) References cited:
- GB-A- 2 262 857
- PATENT ABSTRACTS OF JAPAN vol. 17, no. 317 (E-1382), 16 June 1993 & JP 05 030523 A (MATSUSHITA)
- PATENT ABSTRACTS OF JAPAN vol. 96, no. 11, 29 November 1996 & JP 08 195965 A (CANON INC), 30 July 1996,
- PATENT ABSTRACTS OF JAPAN vol. 16, no. 476 (P-1430), 5 October 1992 & JP 04 168481 A (RICOH CO LTD)

## Description

The present invention relates to digital colour signal modulating apparatus which modulates a digital colour signal to convert digital colour image data to an analogue signal for a conventional colour television set.

The colour image processing circuit in a digital computer uses a R (red) signal, a G (green) signal, and a B (blue) signal, which are combined to define a colour image. A colour television set, on the other hand, uses a luminance signal (Y signal) and colour-difference or chrominance signals to represent the differences between the colour signal components and the luminance signal. For transmission of a computer generated colour signal to a colour television set, the following signal components are produced: a U signal component which denotes the difference between the blue signal B and the luminance signal Y (B - Y), and a V signal component which denotes the difference between the red signal R and the luminance signal Y (R - Y). The U signal component is modulated with a sine wave, while the V signal component is modulated with a cosine wave. The two signal components are added together for transmission to the colour television set. Digital to analogue conversion provides a quadrature modulated signal.

To modulate the U signal component in the digital colour signal with a sine wave as well as to modulate the V signal component with a cosine wave, a conventional digital colour signal modulating apparatus requires a circuit for inputting the U and V signal components, and for multiplying these signal components and those waves respectively. A ROM (Read Only Memory) is therefore required to store sine values and another ROM to store cosine values to execute the trigonometric function. The data may be stored in the ROMs in the form of a look-up table.

The multiplication process depends upon the clock signal in the computer. In order to perform the multiplication at the same frequency as the predetermined frequency of the colour sub-carrier wave requires different look-up tables and therefore different ROMs for the various clock frequencies in different computers, since each of the ROMs must provide the specific values of the trigonometric function independent of the respective clock frequency.

Consequently, different types of digital modulating apparatus use different ROMs corresponding to the clock frequency at which the apparatus operates, so that the ROMs are apparatus specific and not interchangeable.

Where a digital colour signal modulating apparatus is capable of working at various clock frequencies, it requires a number of ROMs each containing the appropriate look-up table, which increases the physical size of the apparatus.

The present invention provides a digital colour signal modulating apparatus which converts a digital colour signal to an analogue signal comprising: a first selector for selecting one of a U signal component and firstcolour burst signal; a second selector for selecting one of a V signal component and second colour burst signal; a third selector for alternately selecting one-of the outputs from the first selector and the second selector at a first frequency twice as high as a second frequency of a colour sub-carrier wave; a through path for forwarding the output of the third selector; an inversion path for inverting the polarity of the output of the third selector; and a fourth selector for alternately selecting one of the outputs from the through path and the inversion path at the second frequency.

GB-A-2262857 discloses a dual system digital encoder. Colour difference signals R-Y and B-Y are converted by a sub-carrier frequency converter into a sub-carrier frequency, and a digital modulator determines levels and phases the converted colour difference signals. A burst generating circuit generates a burst signal after determining a level and phase of the burst signal, and a chroma encoder produces a chroma signal by mixing an output of the digital modulator with the burst signal.

Embodiments of the invention will now be described, by way of example, with reference to the accompanying drawings, in which:
Figure 1 is a block diagram showing the digital colour signal modulating apparatus of the first embodiment;
Figure 2 is a time chart showing the operation of the digital colour signal modulating apparatus of the first embodiment;
Figure 3 is a block diagram showing a comparative example;
Figure 4 is a block diagram showing the digital colour signal modulating apparatus of the second embodiment;
Figure 5 is a time chart showing the operation of the digital colour signal modulating apparatus of the second embodiment;
Figure 6 is a block diagram showing the digital colour signal modulating apparatus of the third embodiment;
Figure 7 is a time chart showing the operation of the digital colour signal modulating apparatus of the third embodiment;
Figure 8 is a block diagram showing the digital colour signal modulating apparatus of the fourth embodiment;
Figure 9 is a block diagram showing the digital colour signal modulating apparatus of the fifth embodiment;
Figure 10 is a diagram showing the operation of the fourth and fifth embodiments;
Figure 11 is a block diagram showing the digital colour signal modulating apparatus of the sixth embodiment;
Figure 12 is a block diagram showing the digital colour signal modulating apparatus of the seventh embodiment.

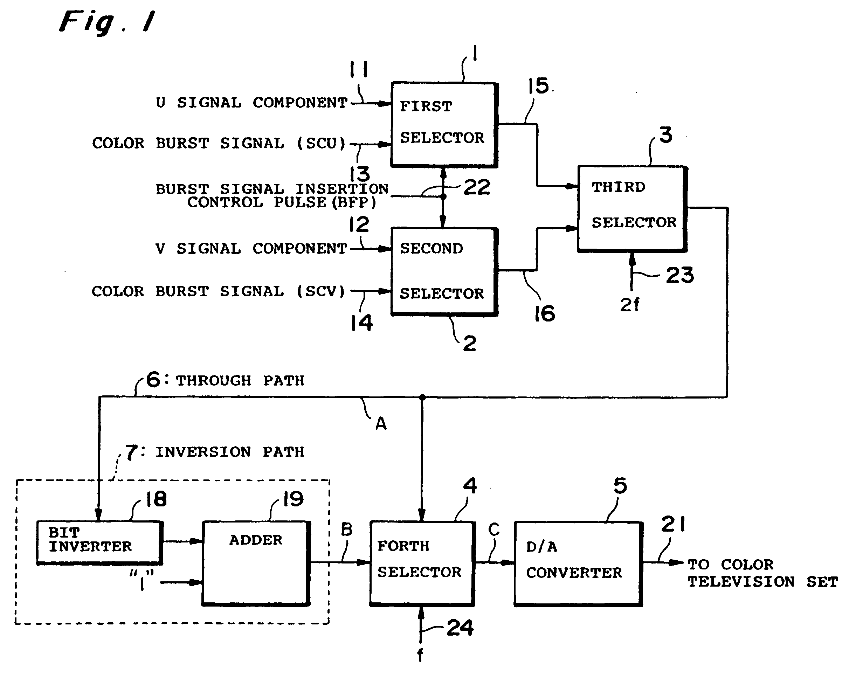

Figure 1 is a block diagram showing the digital colour signal modulating apparatus of the first embodiment. The apparatus comprises the first selector 1 and the second selector 2; the third selector 3 to select one of the signals output therefrom; and the fourth selector 4 to output a modulated digital colour signal, as shown in Figure 1. The output signal from fourth selector 4 is applied to a video terminal of a colour television set (not shown) after conversion into analogue by the D/A (Digital/Analogue) converter 5. The input timing of the digital colour signal is controlled with a control clock signal running at four times the frequency of the colour sub-carrier wave.

The inputs to the first selector 1 comprise a U signal component 11 of the digital colour signal and a colour burst signal SCU 13 for the U signal component. The first selector 1 selectively outputs to the third selector 3 via the output line 15 one of the U signal component 11 and the colour burst signal 13 under the control of the burst signal insertion control pulse BFP 22. The colour burst signal 13 is inserted in one blanking period lying in every horizontal scanning period of the colour television signal. The burst signal insertion control pulse BFP controls the switching of the first selector 1 at the insertion time of the colour burst signal 13.

The second selector 2 receives the V signal component 12 of the digital colour signal and the colour burst signal SCV 14 for the V signal component and selectively outputs one of those two signals to the third selector 3 via the output line 16. As for the first selector 1, the second selector 2 is under the control of the burst signal insertion control pulse BFP 22.

The third selector 3 alternately outputs the output signal of the first selector 1 and the output signal of the second selector 2 periodically, wherein the selection is controlled with the control signal 23 so as to realize the switching at twice the frequency of the colour sub-carrier wave 24.

The through path 6 and the inversion path 7 are arranged in parallel between the third selector 3 and the fourth selector 4. The through path 6 includes the line to forward the output signal of the third selector 3 to the fourth selector 4. The inversion path 7 includes the bit inversion unit 18 and the adder 19 to add "1" to the output signal therefrom as shown in Figure 1. The inversion path 7 inverts bits of the input digital colour signal and adds "1" to the inverted signal, which provides the output signal with a polarity opposite to that of the input signal in analogue terms. The inversion path therefore performs an arithmetic inversion operation on digital data words derived from the input signals. This process introduces the carrier component of the modulated signal.

In alternative embodiments of the invention, the inversion operation may be carried out on the individual U and V components before assembly into a data word sequence or on a complete sequence of assembled data word pairs.

The fourth selector 4 selectively outputs one of the output signals received from the through path 6 and the inversion path 7 periodically. The control signal 24 for controlling the fourth selector 4 has the same frequency as that of colour sub-carrier in colour television, which provides the modulated digital colour signal.

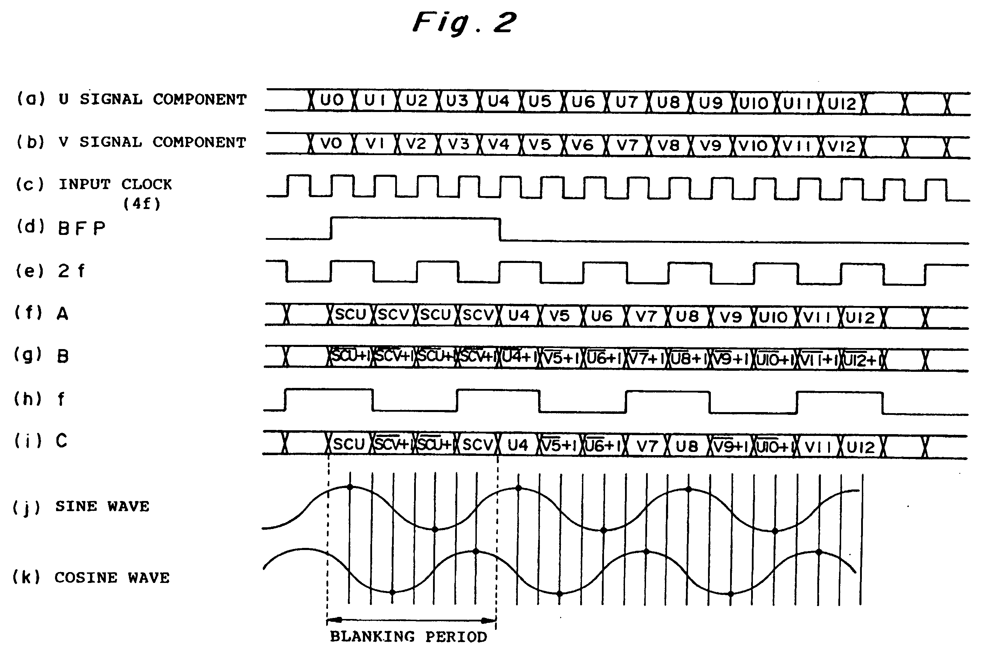

Figure 2 is a time chart showing the operation of the digital colour signal modulation apparatus of the first embodiment, where reference symbol (a) denotes the U signal component of the digital colour signal input into the first selector 1; (b) the V signal component of the digital colour signal input into the second selector 2; (c) the input clock signal to control the digital colour signal, which is set at four times the frequency f of the sub-carrier wave in the colour television set; (d) the burst signal insertion control pulse BFP, which maintains a high level during the forefront specific part of every horizontal scanning period; (e) the clock signal at twice the frequency of the sub-carrier wave, which controls the third selector 3; (f) the output signal A of the through path 6; (g) the output signal B of the inversion path 7; (h) the same frequency as that of the sub-carrier wave; (I) the output signal C of the fourth selector 4; (j) the sine wave which should be originally multiplied by the U signal component; and (k) the cosine wave which should be originally multiplied by the V signal component.

As shown in Figures 2 (a), (b), and (c), the U signal component and the V signal component are provided in synchronization with the input clock signal, wherein each data word comprised in the U and V signal components is composed of several bits representing the level of a digital colour signal. As shown in Figure 2 (d), maintaining "1" of the burst signal insertion control pulse BFP, which is preset "0", during a blanking period allows the first selector 1 and the second selector 2 to selectively output the U signal component SCU 13 and the V signal component SCV 14 both of which are colour burst signals. The third selector 3 alternately selects these input colour burst signals 12 and 14 at twice the frequency of the colour sub-carrier waves, thereby producing the signal A shown in Figure 2 (f). The signal A is fed into the fourth selector 4 via the through path 6, while being converted into the signal B by the inversion path 7 as shown in Figure 2 (g). Similarly to the signal A, the signal B, which is the signal with the polarity opposite to that of the signal A in the corresponding analogue signals, is also fed into the fourth selector 4.

The fourth selector 4 selectively outputs the output signal A of the through path 6 and the output signal B of the inversion path 7 at the frequency of the colour sub-carrier wave as shown in Figure 2(h), whereby during the blanking period, the burst signal SCU of the U signal component is output first, the burst signal $\overline{\text{SCV}}$ + 1 which is the inverse of the signal SCV is output second, the signal $\overline{\text{SCU}}$+ 1 which is inverse to the burst signal SCU is output third, and finally the burst signal SCV is output. As a result, analogue values corresponding to the outputs SCU and $\overline{\text{SCU}}$ + 1 constitute the maximum and minimum values of a sine wave, while the analogue values of the outputs $\overline{\text{SCV}}$ + 1 and SCV constitute those of a cosine wave as shown in Figure 2 (j) and (k). Smoothing those values provides a multiplication of the U signal component by the sine wave and another multiplication of the V signal component by the cosine wave.

After expiration of the blanking period, the U signal component and the V signal component are fed into the third selector 3 via the first selector 1 and the second selector 2. This gives the values corresponding to the peaks of the sine wave and cosine wave with their polarities changing in turn.

In summary, the first selector 1 and the second selector 2 serve to insert the colour burst signal at the proper time; the third selector 3, the through path 6, and the inversion path 7 act to extract the peak values each of which has the plus and minus polarities of the sine and cosine waves; and the fourth selector 4 alternately selects the outputs of the through path 6 and the inversion path 7, thus producing the modulated digital colour signal.

As described above, alternate selection based on the frequency of the colour sub-carrier wave of one of the original U signal component SCU, the original V signal component SCV, and the signals $\overline{\text{SCU}}$+ 1 and $\overline{\text{SCV}}$ + 1 inverse thereto, gives the modulated digital colour signal, without using multipliers and ROMs for the trigonometric functions.

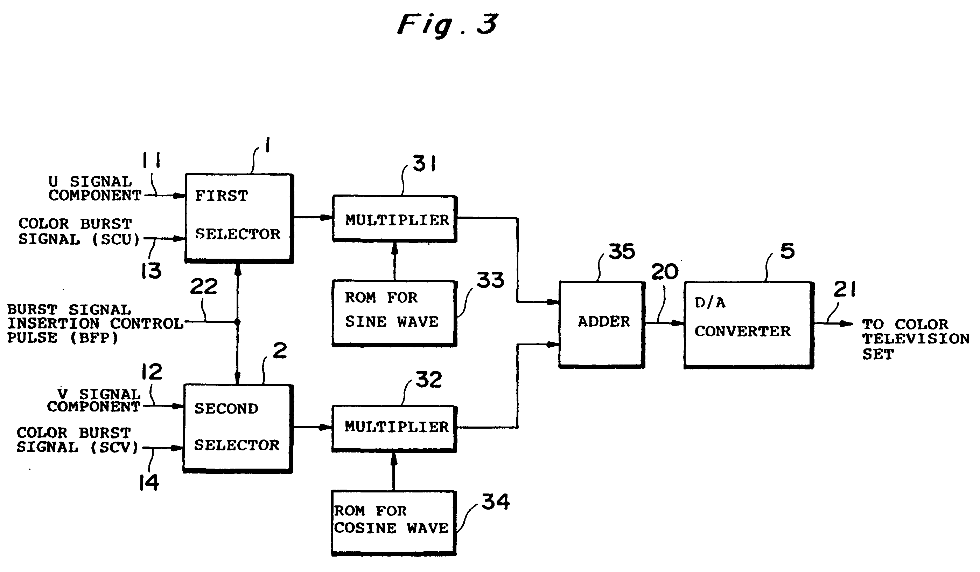

Figure 3 is a block diagram of a prior art apparatus showing the effect of the first embodiment. The block diagram shows a conventional circuit for modulation. Similarly to the first embodiment, the circuit includes the first selector 1 and the second selector 2. The first selectors 1 and 2 output signals to the multipliers 31, 32 respectively, wherein the U signal component is multiplied with values from the ROM 33 for the sine wave, while the V signal component is multiplied with values from the ROM 34 for the cosine wave. The adder 35 adds the output of the multiplier 31 and the output of the multiplier 32, thus completing modulation of the digital colour signal.

As shown in Figure 3, the circuit requires the multipliers 31 and 32, which are rather complex in most cases, and the ROMs for the trigonometric functions; in particular, the ROMs 33 and 34 are only operable with a clock signal running at a predetermined frequency.

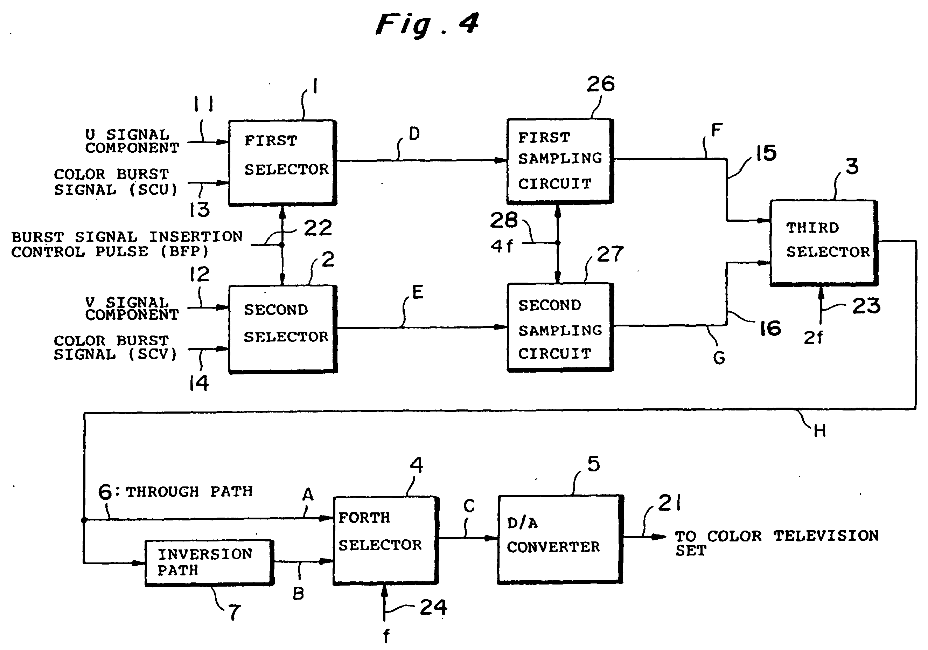

Figure 4 is a block diagram showing the colour signal modulating apparatus of the second embodiment of the present invention. Hereinafter, the same reference numerals as those of the first embodiment denote the same components as those thereof. The apparatus further comprises the sampling circuits 26 and 27 respectively behind the first selectors 1 and 2, and the third selector 3 to receive the outputs thereof. The sampling circuit 26 samples the output of the first selector 1 at a frequency four times as high as that of the colour sub-carrier wave, while the sampling circuit 27 samples the output of the second selector 2 in the same fashion. The apparatus allows the digital colour signals, which are fed into the first and second selectors 1 and 2, to be controlled by an arbitrary clock signal, because sampling circuits 26 and 27 each sample at a frequency four times as high as that of the colour sub-carrier wave, thereby providing the sampled signals to the third selector 3. This enables processing of the output from the third selector 3 in the same way as for the first embodiment. Consequently, the apparatus can process digital colour signals which depend upon clock signals with arbitrary frequencies.

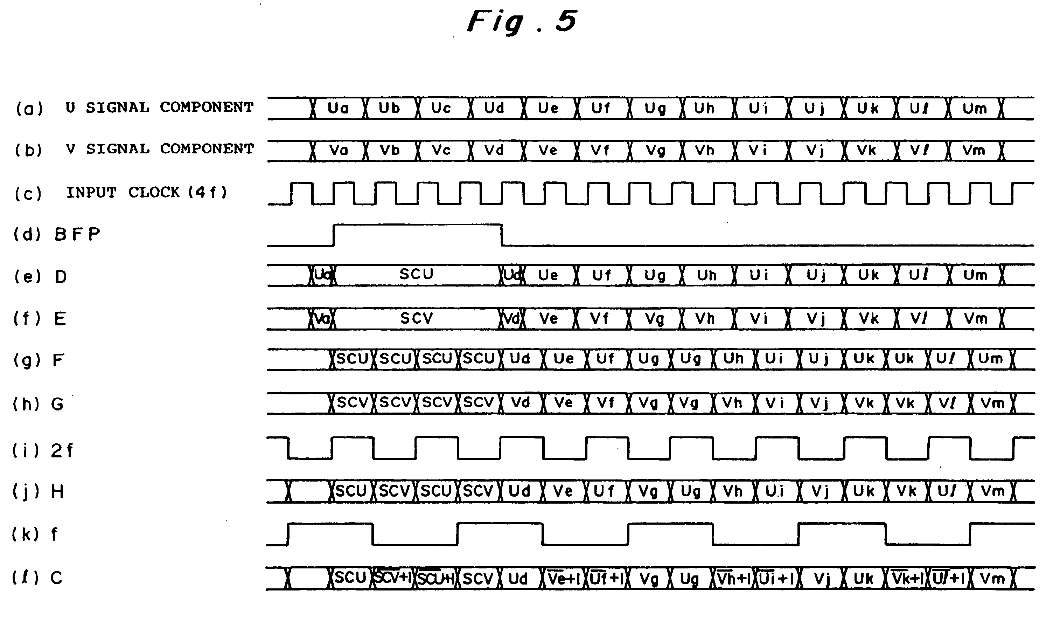

Figure 5 is a time chart showing the operation of the second embodiment, in which reference symbols (a) and (b) denote the U signal component and the V signal component of the digital colour signals input respectively into the first selector 1 and the second selector 2, wherein the signal components enter at a frequency different from a frequency four times as high as that of the colour sub-carrier wave; (c) the frequency four times as high as that of the colour sub-carrier wave; (d) the burst signal insertion control pulse; (e) the output D of the first selector 1; (f) the output E of the second selector 2; (g) the output F of the sampling circuit 26; (h) the output G of the sampling circuit 27; (i) a frequency twice as high as that of the colour sub-carrier wave; (j) the output H of the third selector 3; (k) the frequency of the sub-carrier wave; and (l) the output C of the fourth selector 4.

Though the signals input into the first selector 1 and the second selector 2 are not synchronized with the frequency of the colour sub-carrier wave as shown in Figure 5 (e), (f) and (k), the signals F and G with a frequency twice as high as that of the colour sub-carrier wave are provided to the third selector 3 by the sampling circuits 26 and 27 as shown in Figure 5 (g) and (h). After that, the same procedure as that of the first embodiment follows, thus producing the signal shown in Figure 5 (l).

According to the second embodiment, even where the input digital colour signal with arbitrary frequencies are not synchronized with that of the sub-carrier wave, the apparatus can modulate the digital colour signal, which makes the apparatus universally applicable for various modulations.

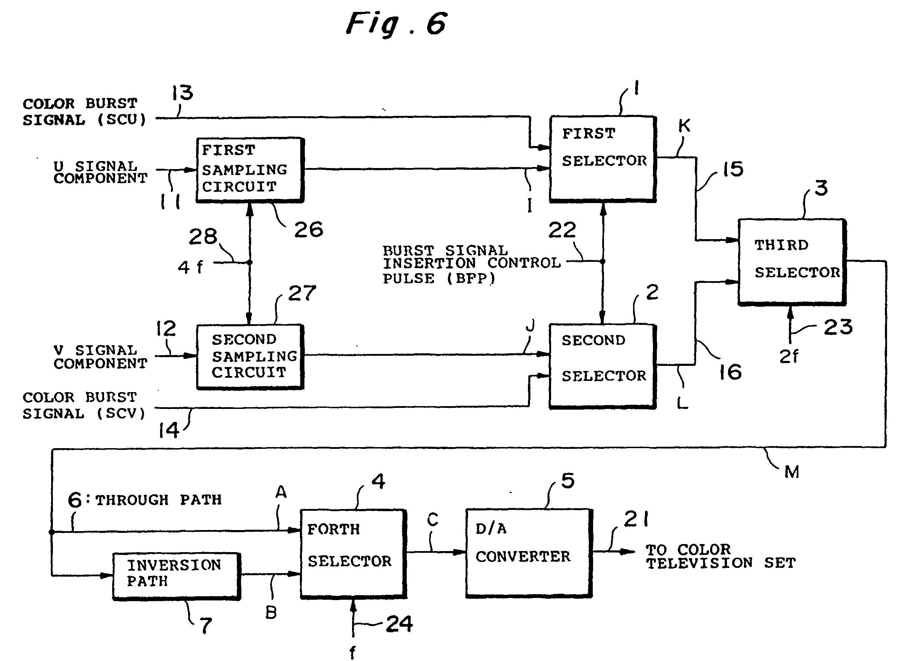

Figure 6 is a block diagram showing the digital colour modulating apparatus of the third embodiment. Hereinbelow, the same reference numerals as those of the second embodiment represent the same components as those thereof. In the apparatus, the sampling circuits 26 and 27 are positioned in front of the first selectors 1 and 2 respectively. The first selector 1 receives from the first sampling circuit 26 the output which is sampled thereby, and selectively provides it according to a specific timing. Furthermore, the burst signal insertion control pulse 22 is input into the first selector 1 independent of the sampling circuit 26. This is a digital signal with a specific value to indicate a certain level of the colour burst signal. The pulse may be input into the third selector 3 directly because the value is kept constant irrespective of the clock signal. That is why the first sampling circuit 26 is positioned prior to the input terminal of the U signal component of the first selector 1. The sampling circuit 27 located in front of the second selector 2 also works in a similar way.

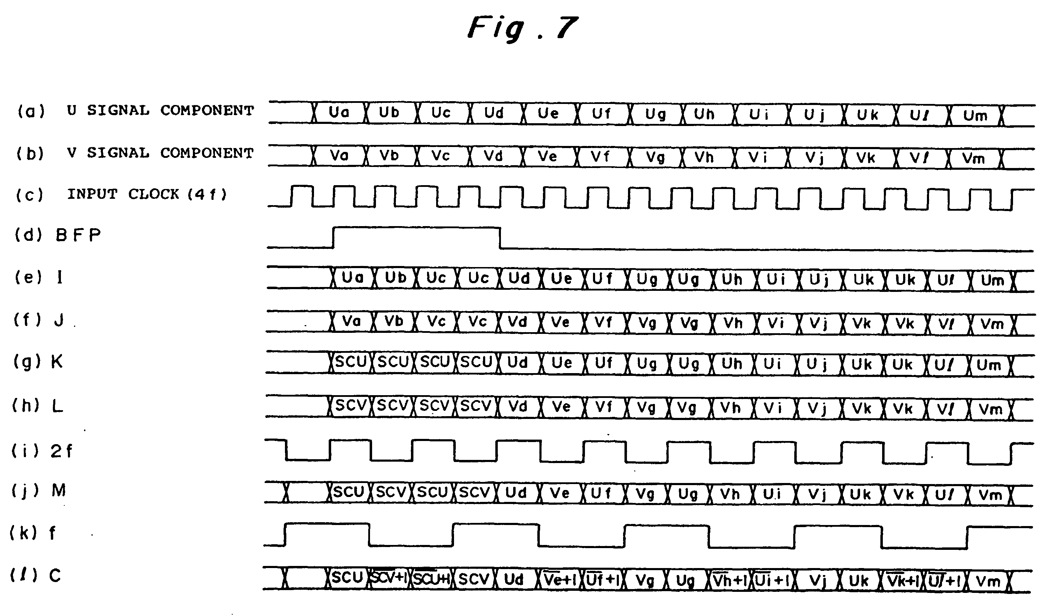

Figure 7 is a time chart showing the operation of the digital colour apparatus of the third embodiment, where reference symbols (a) - (d) denote the same signals as those in the second embodiment; (e) the output I of the sampling circuit 26; (f) the output J of the sampling circuit 27; (g) the output K of the first selector 1; (h) the output L of the second selector 2; and (j) the output M of the third selector 3. A difference from the second embodiment is that the colour burst signal involved in the signal input into the third selector 3 is not sampled. However, the signal which the third selector 3 selects and the fourth selector outputs is similar to that of the first embodiment.

According to the third embodiment, modulation of the input digital colour signal with an arbitrary frequency non-synchronizing with that of the colour sub-carrier wave can be performed, in a similar way to the second embodiment.

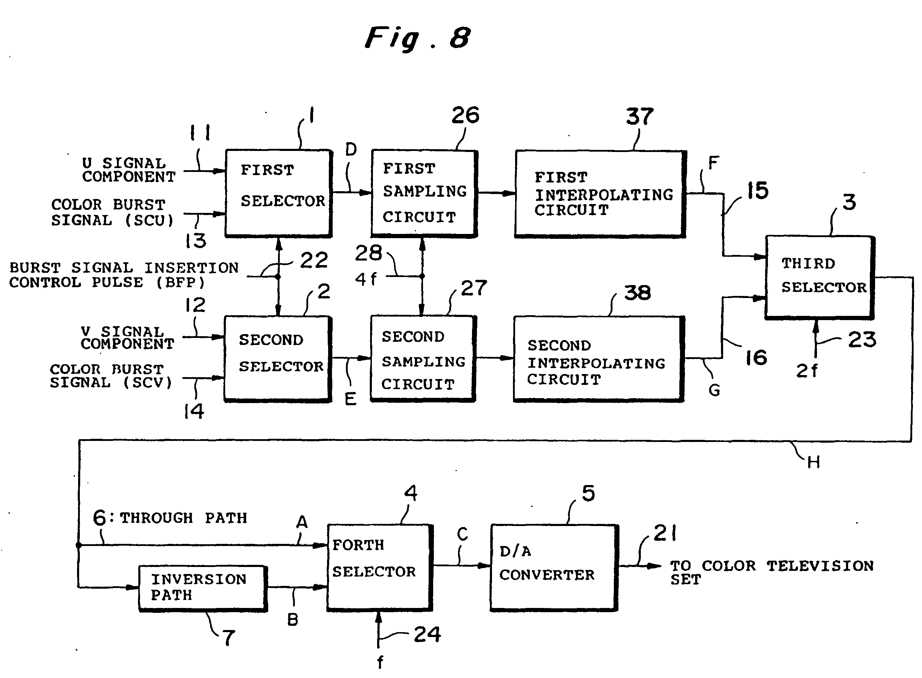

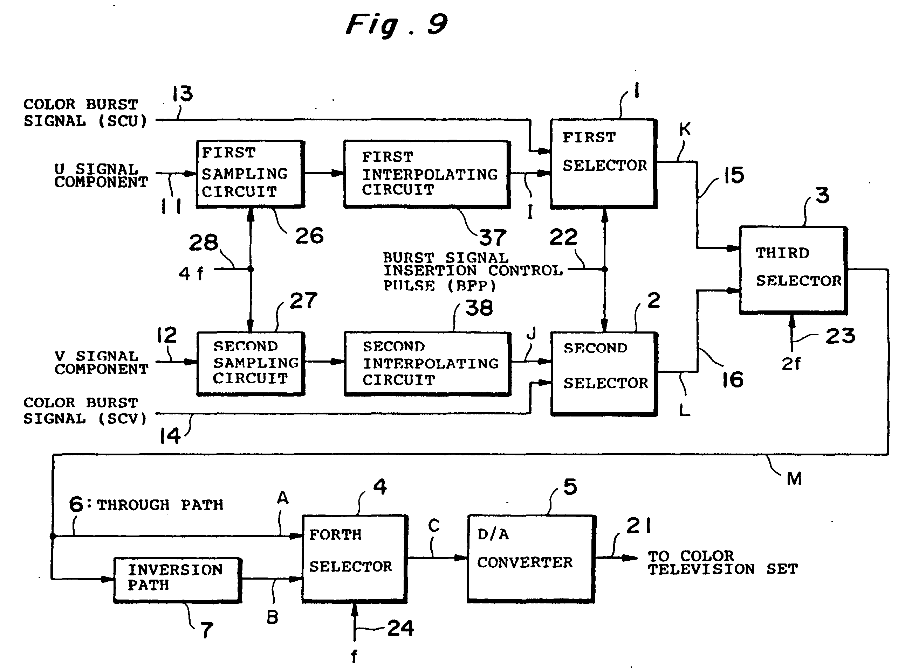

Figure 8 is a block diagram showing the digital colour modulation apparatus of the fourth embodiment, and Figure 9 is a block diagram showing the digital colour modulation apparatus of the fifth embodiment. The former apparatus includes interpolating circuits 37 and 38 behind the sampling circuits 26 and 27 respectively. The interpolating circuits are well-known as an interpolation filter, and compare the levels of the adjacent signals to insert the average value or the middle value therebetween.

As shown in Figure 7, the sampling circuits 26 and 27 sample the input signals at a frequency four times as high as that of the sub-carrier wave. However, for such sampling, the level of the adjacent signals is often changed unnaturally by the input signal, which determinates the output signal quality. That is why the interpolating filters 37 and 38 are laid behind the sampling circuits 26 and 27 in order to correct the signal whose level has changed rapidly. Such a correction is preferably performed after sampling in the sampling circuits 26 and 27. Accordingly, with the sampling circuits 26 and 27 positioned in front of the first and second selectors 1 and 2, the first and second interpolating circuits 37 and 38 are positioned likewise in the embodiment of Figure 9.

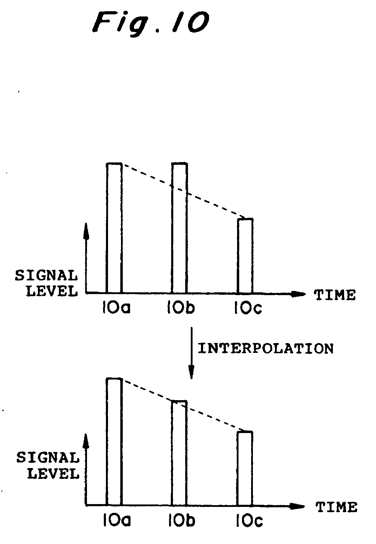

Figure 10 is a diagram showing the operation of the digital colour modulating apparatus of the fourth and fifth embodiments, in which the upper diagram illustrates the non-interpolated signal level variation, and the lower illustrates the interpolated signal level variation. The diagram shows an example on sampling the input signal with a frequency lower than that of the sampling clock signal, wherein successive sampling of signals 10a and 10b whose levels are the same as each other is followed by sampling the signal 10c whose level is a little lower. The interpolating circuits 37, 38 smooth the sharp change between the signals 10b and 10c, thereby avoiding the deterioration of the image quality caused through sampling. More specifically, the circuits 37 and 38 replace the signal 10b which has caused the sharp change with the signal 10b' which makes the change moderate. The effect of sampling at four times the frequency of an input signal can be provided by sampling at double that frequency and interpolating between the adjacent signals.

According to the fourth and fifth embodiments, modulating the input digital colour signal synchronized with a clock signal of arbitrary frequency can be easily performed, and in addition, the deterioration of the image quality caused by sampling can be avoided.

Furthermore, for an input signal with low clock frequency, an increase in the number of data points through sampling and interpolating therebetween leads to the modulation of high quality images.

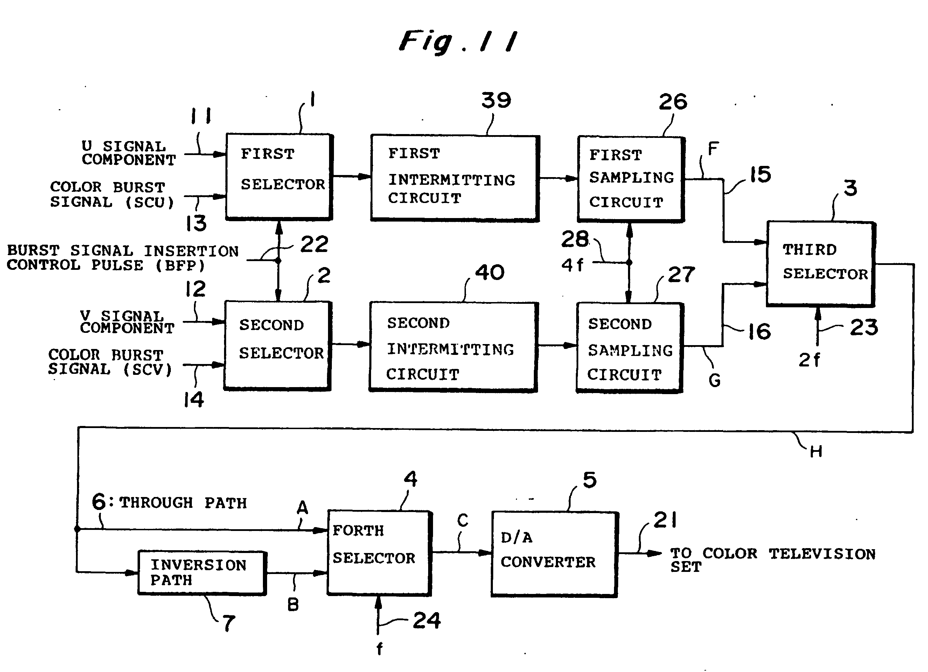

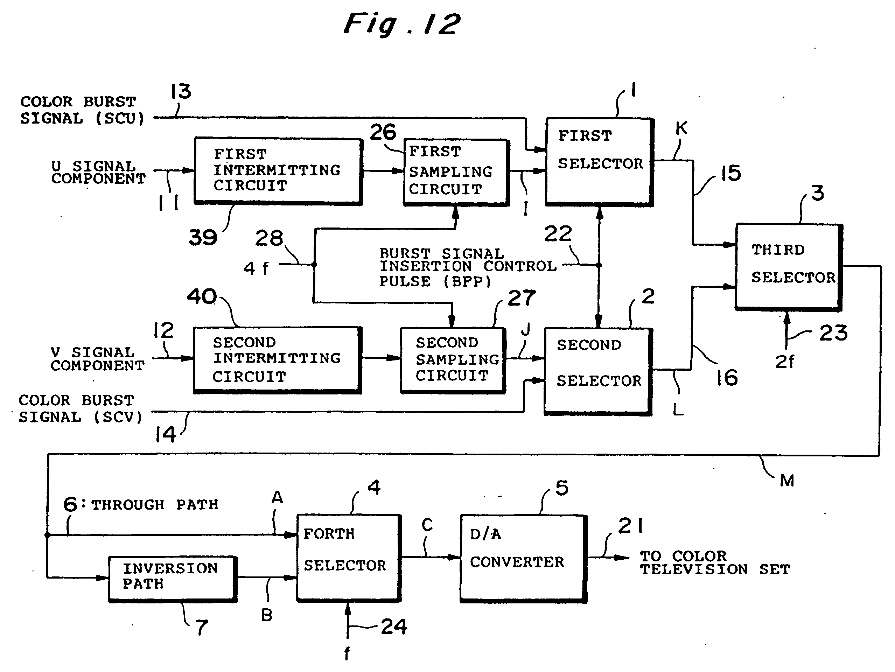

Figures 11 and 12 are block diagrams showing the digital colour signal modulating apparatus of the sixth and seventh embodiments of the present invention, respectively. The apparatus of the sixth embodiment includes the intermitting circuits 39 and 40 in front of the sampling circuits 26 and 27. The intermitting circuits 39 and 40 are well-known as a decimation filter, which intermits the digital signal to smooth the levels of the adjacent digital signals. In short, such an intermitting before sampling prevents some parts of the sampled signal from sharply changing in level.

The seventh embodiment in Figure 12 is a modified example, where the sampling circuits 26 and 27 are laid in front of the first selector 1 and second selector 2 with their functions and configurations similar to those of the sixth embodiment.

While the apparatus in the fourth and fifth embodiments adjusts the change in signal level after sampling, the apparatus in the sixth and seventh embodiments adjusts the original signal by selection of the signal with the correct level. One of the former type and the latter type can be employed according the characteristics of the input signal. In both cases, modulation of high quality images can be easily realized.

Moreover, for an input signal with a clock frequency higher than the sampling frequency, the intermitting circuit selects the signal with proper frequency and outputs it to the sampling circuit, thus providing a modulated image of higher quality.

In addition, the apparatus in the fifth and seventh embodiments processes the colour burst signal without using the interpolating circuit or the intermitting circuit and so these circuits do not affect the colour burst signal levels.

## Claims

1. A digital colour signal modulating apparatus which converts a digital colour signal to an analogue signal comprising:
a first selector (1) for selecting one of a U signal component and first colour burst signal (SCU);
a second selector (2) for selecting one of a V signal component and second colour burst signal (SCV);
a third selector (3) for alternately selecting one of the outputs from the first selector and the second selector at a first frequency twice as high as a second frequency of a colour sub-carrier wave;
a through path (6) for forwarding the output of the third selector;
an inversion path (7) for inverting the polarity of the output of the third selector; and
a fourth selector (4) for alternately selecting one of the outputs from the through path and the inversion path at the second frequency.

2. The digital colour signal modulating apparatus of claim 1, comprising:
a first sampling circuit (26) for sampling the output of the first selector at a third frequency four times as high as the second frequency of the colour sub-carrier wave;
a second sampling circuit (27) for sampling the output of the second selector at the third frequency;
the third selector being for alternately selecting outputs from the first sampling circuit and the second sampling circuit.

3. The digital colour signal modulating apparatus of claim 1, comprising:
a first sampling circuit (26) for sampling the U signal component of digital colour signal at a third frequency four times as high as the second frequency of the colour sub-carrier wave;
the first selector being for selecting one of an output from the first sampling circuit and the first colour burst signal;
a second sampling circuit (27) for sampling a V signal component of the digital colour signal at the third frequency;
the second selector being for selecting one of an output from the second sampling circuit and second colour burst signal.

4. The digital colour signal modulating apparatus of claim 2, comprising:
a first interpolating circuit (37) for adjusting a first change in level of the output from the first sampling circuit;
a second interpolating circuit (38) for adjusting a second change in level of the output from the second sampling circuit;
the third selector being for alternately selecting outputs from the first interpolating circuit and the second interpolating circuit.

5. The digital colour signal modulating apparatus of claim 3, comprising:
a first interpolating circuit (37) for adjusting a first change in level of the output from the first sampling circuit;
the first selector being for selecting one of an output from the first interpolating circuit and the first colour burst signal;
a second interpolating circuit (38) for adjusting a second change in level of an output from the second sampling circuit;
the second selector being for selecting one of an output from the second interpolating circuit and the second colour burst signal.

6. The digital colour signal modulating apparatus of claim 2, comprising:
a first intermitting circuit (39) for smoothing levels of adjacent signals in the output of the first selector;
the first sampling circuit being for sampling the output of the first intermitting circuit;
a second intermitting circuit (40) for smoothing levels of adjacent signals in the output of the second selector;
the second sampling circuit being for sampling the output of the second intermitting circuit.

7. The digital colour signal modulating apparatus of claim 3, comprising:
a first intermitting circuit (39) for smoothing levels of adjacent signals in the U signal component of the digital colour signal;
the first sampling circuit being for sampling the output of the first intermitting circuit;
a second intermitting circuit (40) for smoothing levels of adjacent signals in the V signal component of the digital colour signal;
the second sampling circuit being for sampling an output of the second intermitting circuit.

## Patentansprüche

1. Modulationsvorrichtung für digitale Farbsignale, die ein digitales Farbsignal in ein analoges Signal umwandelt, welche Vorrichtung folgendes aufweist:
einen ersten Selektor (1) zum Auswählen entweder einer U-Signalkomponente oder eines ersten Farb-Burstsignals (SCU);
einen zweiten Selektor (2) zum Auswählen entweder einer V-Signalkomponente oder eines zweiten Farb-Burstsignals (SCV);
einen dritten Selektor (3) zum abwechselnden Auswählen einer der Ausgaben von dem ersten Selektor und dem zweiten Selektor bei einer ersten Frequenz, die zweimal so hoch wie eine zweite Frequenz einer Farb-Hilfsträgerwelle ist;
einen Durchgangspfad (6) zum Weiterleiten der Ausgabe des dritten Selektors;
einen Inversionspfad (7) zum Invertieren der Polarität der Ausgabe des dritten Selektors; und
einen vierten Selektor (4) zum abwechselnden Auswählen einer der Ausgaben von dem Durchgangspfad und dem Inversionspfad bei der zweiten Frequenz.

2. Modulationsvorrichtung für digitale Farbsignale nach Anspruch 1, die folgendes aufweist:
eine erste Abtastschaltung (26) zum Abtasten der Ausgabe des ersten Selektors bei einer dritten Frequenz, die viermal so hoch wie die zweite Frequenz der Farb-Hilfsträgerwelle ist;
eine zweite Abtastschaltung (27) zum Abtasten der Ausgabe des zweiten Selektors bei der dritten Frequenz;
wobei der dritte Selektor zum abwechselnden Auswählen von Ausgaben von der ersten Abtastschaltung und der zweiten Abtastschaltung dient.

3. Modulationsvorrichtung für digitale Farbsignale nach Anspruch 1, die folgendes aufweist:
eine erste Abtastschaltung (26) zum Abtasten der U-Signalkomponente eines digitalen Farbsignals bei einer dritten Frequenz, die viermal so hoch wie die zweite Frequenz der Farb-Hilfsträgerwelle ist;
wobei der erste Selektor zum Auswählen entweder einer Ausgabe von der ersten Abtastschaltung oder des ersten Farb-Burstsignals dient;
eine zweite Abtastschaltung (27) zum Abtasten einer V-Signalkomponente des digitalen Farbsignals bei der dritten Frequenz;
wobei der zweite Selektor zum Auswählen entweder einer Ausgabe von der zweiten Abtastschaltung oder des zweiten Farb-Burstsignals dient.

4. Modulationsvorrichtung für digitale Farbsignale nach Anspruch 2, die folgendes aufweist:
eine erste Interpolationsschaltung (37) zum Einstellen einer ersten Änderung bezüglich eines Pegels der Ausgabe von der ersten Abtastschaltung;
eine zweite Interpolationsschaltung (38) zum Einstellen einer zweiten Änderung bezüglich eines Pegels der Ausgabe von der zweiten Abtastschaltung;
wobei der dritte Selektor zum abwechselnden Auswählen von Ausgaben von der ersten Interpolationsschaltung und der zweiten Interpolationsschaltung dient.

5. Modulationsvorrichtung für digitale Farbsignale nach Anspruch 3, die folgendes aufweist:
eine erste Interpolationsschaltung (37) zum Einstellen einer ersten Änderung bezüglich eines Pegels der Ausgabe von der ersten Abtastschaltung;
wobei der erste Selektor zum Auswählen entweder einer Ausgabe von der ersten Interpolationsschaltung oder des ersten Farb-Burstsignals dient;
eine zweite Interpolationsschaltung (38) zum Einstellen einer zweiten Änderung bezüglich eines Pegels einer Ausgabe von der zweiten Abtastschaltung;
wobei der zweite Selektor zum Auswählen entweder einer Ausgabe von der zweiten Interpolationsschaltung oder des zweiten Farb-Burstsignals dient.

6. Modulationsvorrichtung für digitale Farbsignale nach Anspruch 2, die folgendes aufweist:
eine erste intermittierende Schaltung (39) zum Glätten von Pegeln benachbarter Signale in der Ausgabe des ersten Selektors;
wobei die erste Abtastschaltung zum Abtasten der Ausgabe der ersten intermittierenden Schaltung dient;
eine zweite intermittierende Schaltung (40) zum Glätten von Pegeln benachbarter Signale in der Ausgabe des zweiten Selektors;
wobei die zweite Abtastschaltung zum Abtasten der Ausgabe der zweiten intermittierenden Schaltung dient.

7. Modulationsvorrichtung für digitale Farbsignale nach Anspruch 3, die folgendes aufweist:
eine erste intermittierende Schaltung (39) zum Glätten von Pegeln benachbarter Signale in der U-Signalkomponente des digitalen Farbsignals;
wobei die erste Abtastschaltung zum Abtasten der Ausgabe der ersten intermittierenden Schaltung dient;
eine zweite intermittierende Schaltung (40) zum Glätten von Pegeln benachbarter Signale in der V-Signalkomponente des digitalen Farbsignals;
wobei die zweite Abtastschaltung zum Abtasten einer Ausgabe der zweiten intermittierenden Schaltung dient.

## Revendications

1. Appareil de modulation d'un signal numérique de couleur qui convertit un signal numérique de couleur en un signal analogique, comportant :
un premier sélecteur (1) destiné à sélectionner l'un d'une composante de signal U et d'un premier signal de salve de couleur (SCU) ;
un deuxième sélecteur (2) destiné à sélectionner l'un d'une composante de signal V et d'un second signal de salve de couleur (SCV) ;
un troisième sélecteur (3) destiné à sélectionner alternativement l'un des signaux de sortie du premier sélecteur et du second sélecteur à une première fréquence deux fois plus élevée qu'une seconde fréquence d'une onde de sous-porteuse de couleur ;
un trajet direct (6) pour envoyer le signal de sortie du troisième sélecteur ;
un trajet à inversion (7) pour inverser la polarité du signal de sortie du troisième sélecteur ; et
un quatrième sélecteur (4) destiné à sélectionner alternativement l'un des signaux de sortie provenant du trajet direct et du trajet à inversion à la seconde fréquence.

2. Appareil de modulation de signal numérique de couleur selon la revendication 1, comportant :
un premier circuit d'échantillonnage (26) destiné à échantillonner le signal de sortie du premier sélecteur à une troisième fréquence égale à quatre fois la deuxième fréquence de l'onde de la sous-porteuse de couleur ;
un deuxième circuit d'échantillonnage (27) destiné à échantillonner le signal de sortie du deuxième sélecteur à la troisième fréquence ;
le troisième sélecteur étant destiné à sélectionner alternativement des signaux de sortie du premier circuit d'échantillonnage et du deuxième circuit d'échantillonnage.

3. Appareil de modulation de signal numérique de couleur selon la revendication 1, comportant :
un premier circuit d'échantillonnage (26) destiné à échantillonner la composante de signal U d'un signal numérique de couleur à une troisième fréquence égale à quatre fois la deuxième fréquence de l'onde de la sous-porteuse de couleur ;
le premier sélecteur étant destiné à sélectionner l'un d'un signal de sortie du premier circuit d'échantillonnage et du premier signal de salve de couleur ;
un deuxième circuit d'échantillonnage (27) destiné à échantillonner une composante de signal V du signal numérique de couleur à la troisième fréquence ;
le deuxième sélecteur étant destiné à sélectionner l'un d'un signal de sortie provenant du deuxième circuit d'échantillonnage et du second signal de salve de couleur.

4. Appareil de modulation de signal numérique de couleur selon la revendication 2, comportant :
un premier circuit (37) d'interpolation destiné à ajuster une première variation de niveau du signal de sortie provenant du premier circuit d'échantillonnage ;
un second circuit d'interpolation (38) destiné à ajuster une seconde variation du niveau du signal de sortie provenant du second circuit d'échantillonnage ;
le troisième sélecteur étant destiné à sélectionner alternativement des signaux de sortie provenant du premier circuit d'interpolation et du second circuit d'interpolation.

5. Appareil de modulation de signal numérique de couleur selon la revendication 3, comportant :
un premier circuit d'interpolation (37) destiné à ajuster une première variation de niveau du signal de sortie provenant du premier circuit d'échantillonnage ;
le premier sélecteur étant destiné à sélectionner l'un d'un signal de sortie provenant du premier circuit d'interpolation et du premier signal de salve de couleur ;
un second circuit d'interpolation (38) destiné à ajuster une seconde variation de niveau d'un signal de sortie provenant du second circuit d'échantillonnage ;
le second sélecteur étant destiné à sélectionner l'un d'un signal de sortie provenant du second circuit d'interpolation et du second signal de salve de couleur.

6. Appareil de modulation de signal numérique de couleur selon la revendication 2, comportant :
un premier circuit d'intermittence (39) destiné à lisser des niveaux de signaux adjacents dans le signal de sortie du premier sélecteur ;
le premier circuit d'échantillonnage étant destiné à échantillonner le signal de sortie du premier circuit à intermittence ;
un second circuit à intermittence (40) destiné à lisser des niveaux de signaux adjacents dans le signal de sortie du second sélecteur ; et
le second circuit d'échantillonnage étant destiné à échantillonner le signal de sortie du second circuit à intermittence.

7. Appareil de modulation de signal numérique de couleur selon la revendication 3, comportant :
un premier circuit d'intermittence (39) destiné à lisser des niveaux de signaux adjacents dans la composante de signal U du signal numérique de couleur ;
le premier circuit d'échantillonnage étant destiné à échantillonner le signal de sortie du premier circuit à intermittence ;
un second circuit à intermittence (40) destiné à lisser des niveaux de signaux adjacents dans la composante de signal V du signal numérique de couleur ;
le second circuit d'échantillonnage étant destiné à échantillonner un signal de sortie du second circuit à intermittence.
